# EUROPEAN PATENT APPLICATION

(11) **EP 4 625 116 A1**
(43) Date of publication of application: **01.10.2025**
(21) Application number: 24305446.7
(22) Date of filing: 25.03.2024
(51) Int. Cl.: G06F 3/01, G06T 19/00

(54) **POSES OF TRACKABLE OBJECTS**

(71) Applicant: InterDigital CE Patent Holdings, SAS, 75017 Paris (FR)
(72) Inventor: HIRTZLIN, Patrice, 35830 BETTON (FR); FONTAINE, Loic, 35530 NOYAL SUR VILAINE (FR); ONNO, Stephane, 35760 SAINT GREGOIRE (FR); JOUET, Pierrick, 35000 RENNES (FR); FAIVRE D'ARCIER, Etienne, 35750 SAINT GONLAY (FR); LELIEVRE, Sylvain, 35760 MONTGERMONT (FR); MARTIN-COCHER, Gaëlle, TORONTO, M6G-3H1 (CA)
(74) Representative: Vossius & Partner Patentanwälte Rechtsanwälte mbB

(57) **Abstract**

Disclosed herein are systems, methods, and instrumentalities associated with the transmission of poses for one or more trackable objects in a scene. A WTRU may determine one or more trackable objects associated with the scene, determine one or more parameters associated with the one or more trackable objects, and transmit pose information associated with the one or more trackable objects to a server. The one or more trackable objects may include a floor in the scene or a marker in the scene. The one or more parameters may include an identifier of a space associated with the one or more trackable objects, respective identifiers of the one or more trackable objects, and/or respective types of the one or more trackable objects. The WTRU may transmit the pose information associated with the one or more trackable objects together with pose information associated with a view, or separately from the pose information associated with the view.

## Description

### BACKGROUND

In extended reality including augmented reality (AR), virtual content may be inserted into a user-realistic environment via optical or video see-through devices. Knowledge of the user-realistic environment may be built based on sensor data.

### SUMMARY

Disclosed herein are systems, methods, and instrumentalities associated with trackable objects in a scene. According to embodiments of the disclosure, a wireless transmit/receive unit (WTRU) may determine a trackable object associated with a scene (e.g., a virtual scene) and further determine an identifier that identifies the trackable object in a scene description file associated with the scene. The WTRU may transmit configuration information to a server, wherein the configuration information may indicate the identifier that identifies the trackable object in the scene description file.

In examples, the WTRU may further determine a trackable objects array, wherein the identifier that identifies the trackable object may correspond to an index of the trackable object in the trackable objects array. In examples, the WTRU may further determine one or more other parameters associated with the trackable object from the scene description file based on the identifier that identifies the trackable object in the scene description file. In examples, the WTRU may further determine, based on the identifier that identifies the trackable object in the scene description file, one or more other trackable objects in the scene that may be attached to the trackable object.

In examples, the WTRU may further determine a mapping between the identifier that identifies the trackable object in the scene description file and an identifier of a space related to the trackable object. In examples, the WTRU may determine the space related to the trackable object based on the mapping.

According to embodiments of the disclosure, a server device may receive configuration information from a WTRU, wherein the configuration information indicates an identifier that identifies a trackable object in a scene description file. The serve device may determine the trackable object in a scene associated with the scene description file, and generate rendering information associated with the trackable object based at least on the identifier that identifies the trackable object in the scene description file. In examples, the server device may further determine a mapping between the identifier that identifies the trackable object in the scene description file and an identifier of a space related to the trackable object.

### BRIEF DESCRIPTION OF THE DRAWINGS

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 is a diagram illustrating an example video encoder.
FIG. 3 is a diagram illustrating an example video decoder.
FIG. 4 is a diagram illustrating an example of a system in which various aspects and examples may be implemented.
FIG. 5 is a picture illustrating examples of spatial relationships between a trackable object, an anchor, and/or a virtual asset.
FIG. 6 is a diagram illustrating an example architecture for an interactive immersive service.
FIG. 7 is a diagram illustrating an example of a call flow associated with split rendering.
FIG. 8 is a diagram illustrating example operations that may be associated with transmitting pose information of a trackable object.

### DETAILED DESCRIPTION

A more detailed understanding can be had from the following description, given by way of example in conjunction with the accompanying drawings.

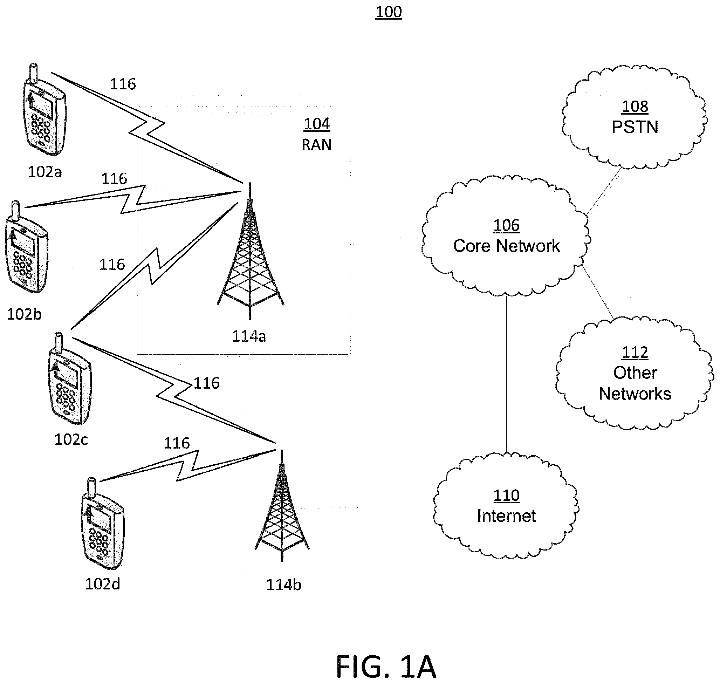

FIG. 1A is a diagram illustrating an example communications system 100 in which one or more disclosed embodiments can be implemented. The communications system 100 can be a multiple access system that provides content, such as voice, data, video, messaging, broadcast, etc., to multiple wireless users. The communications system 100 can enable multiple wireless users to access such content through the sharing of system resources, including wireless bandwidth. For example, the communications systems 100 can employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 can include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d can be any type of device configured to operate and/or communicate in a wireless environment. By way of example, the WTRUs 102a, 102b, 102c, 102d, any of which can be referred to as a "station" and/or a "STA", can be configured to transmit and/or receive wireless signals and can include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d can be interchangeably referred to as a UE.

The communications systems 100 can also include a base station 114a and/or a base station 114b. Each of the base stations 114a, 114b can be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b can be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b can include any number of interconnected base stations and/or network elements.

The base station 114a can be part of the RAN 104/113, which can also include other base stations and/or network elements (not shown), such as a base station controller (BSC), a radio network controller (RNC), relay nodes, etc. The base station 114a and/or the base station 114b can be configured to transmit and/or receive wireless signals on one or more carrier frequencies, which can be referred to as a cell (not shown). These frequencies can be in licensed spectrum, unlicensed spectrum, or a combination of licensed and unlicensed spectrum. A cell can provide coverage for a wireless service to a specific geographical area that can be relatively fixed or that can change over time. The cell can further be divided into cell sectors. For example, the cell associated with the base station 114a can be divided into three sectors. Thus, in one embodiment, the base station 114a can include three transceivers, e.g.,, one for each sector of the cell. In an embodiment, the base station 114a can employ multiple-input multiple output (MIMO) technology and can utilize multiple transceivers for each sector of the cell. For example, beamforming can be used to transmit and/or receive signals in desired spatial directions.

The base stations 114a, 114b can communicate with one or more of the WTRUs 102a, 102b, 102c, 102d over an air interface 116, which can be any suitable wireless communication link (e.g., radio frequency (RF), microwave, centimeter wave, micrometer wave, infrared (IR), ultraviolet (UV), visible light, etc.). The air interface 116 can be established using any suitable radio access technology (RAT).

More specifically, as noted above, the communications system 100 can be a multiple access system and can employ one or more channel access schemes, such as CDMA, TDMA, FDMA, OFDMA, SC-FDMA, and the like. For example, the base station 114a in the RAN 104/113 and the WTRUs 102a, 102b, 102c can implement a radio technology such as Universal Mobile Telecommunications System (UMTS) Terrestrial Radio Access (UTRA), which can establish the air interface 115/116/117 using wideband CDMA (WCDMA). WCDMA can include communication protocols such as High-Speed Packet Access (HSPA) and/or Evolved HSPA (HSPA+). HSPA can include High-Speed Downlink (DL) Packet Access (HSDPA) and/or High-Speed UL Packet Access (HSUPA).

In an embodiment, the base station 114a and the WTRUs 102a, 102b, 102c can implement a radio technology such as Evolved UMTS Terrestrial Radio Access (E-UTRA), which can establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c can implement a radio technology such as NR Radio Access, which can establish the air interface 116 using New Radio (NR).

In an embodiment, the base station 114a and the WTRUs 102a, 102b, 102c can implement multiple radio access technologies. For example, the base station 114a and the WTRUs 102a, 102b, 102c can implement LTE radio access and NR radio access together, for instance using dual connectivity (DC) principles. Thus, the air interface utilized by WTRUs 102a, 102b, 102c can be characterized by multiple types of radio access technologies and/or transmissions sent to/from multiple types of base stations (e.g., a eNB and a gNB).

In other embodiments, the base station 114a and the WTRUs 102a, 102b, 102c can implement radio technologies such as IEEE 802.11 (e.g.,, Wireless Fidelity (WiFi), IEEE 802.16 (e.g.,, Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A can be a wireless router, Home Node B, Home eNode B, or access point, for example, and can utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d can implement a radio technology such as IEEE 802.11 to establish a wireless local area network (WLAN). In an embodiment, the base station 114b and the WTRUs 102c, 102d can implement a radio technology such as IEEE 802.15 to establish a wireless personal area network (WPAN). In yet another embodiment, the base station 114b and the WTRUs 102c, 102d can utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b can have a direct connection to the Internet 110. Thus, the base station 114b can not be required to access the Internet 110 via the CN 106/115.

The RAN 104/113 can be in communication with the CN 106/115, which can be any type of network configured to provide voice, data, applications, and/or voice over internet protocol (VoIP) services to one or more of the WTRUs 102a, 102b, 102c, 102d. The data can have varying quality of service (QoS) requirements, such as differing throughput requirements, latency requirements, error tolerance requirements, reliability requirements, data throughput requirements, mobility requirements, and the like. The CN 106/115 can provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 can be in direct or indirect communication with other RANs that employ the same RAT as the RAN 104/113 or a different RAT. For example, in addition to being connected to the RAN 104/113, which can be utilizing a NR radio technology, the CN 106/115 can also be in communication with another RAN (not shown) employing a GSM, UMTS, CDMA 2000, WiMAX, E-UTRA, or WiFi radio technology.

The CN 106/115 can also serve as a gateway for the WTRUs 102a, 102b, 102c, 102d to access the PSTN 108, the Internet 110, and/or the other networks 112. The PSTN 108 can include circuit-switched telephone networks that provide plain old telephone service (POTS). The Internet 110 can include a global system of interconnected computer networks and devices that use common communication protocols, such as the transmission control protocol (TCP), user datagram protocol (UDP) and/or the internet protocol (IP) in the TCP/IP internet protocol suite. The networks 112 can include wired and/or wireless communications networks owned and/or operated by other service providers. For example, the networks 112 can include another CN connected to one or more RANs, which can employ the same RAT as the RAN 104/113 or a different RAT.

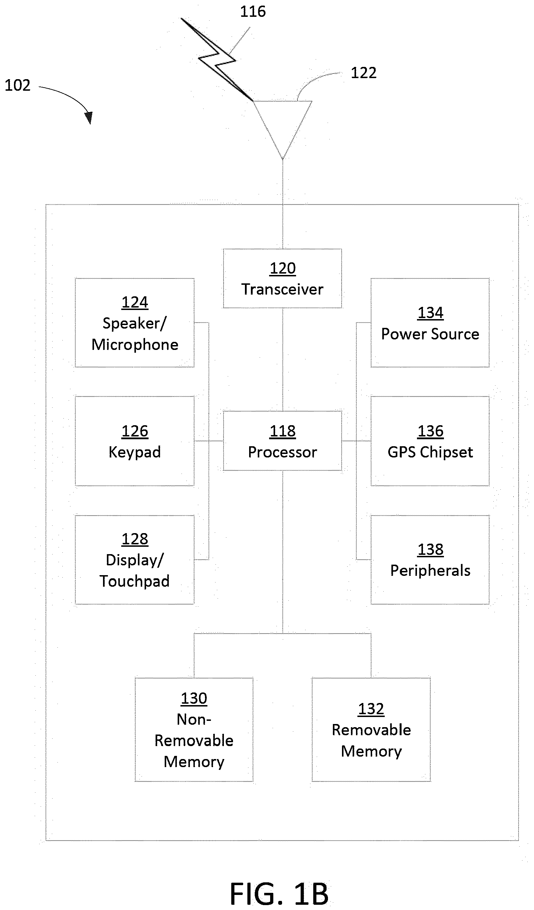

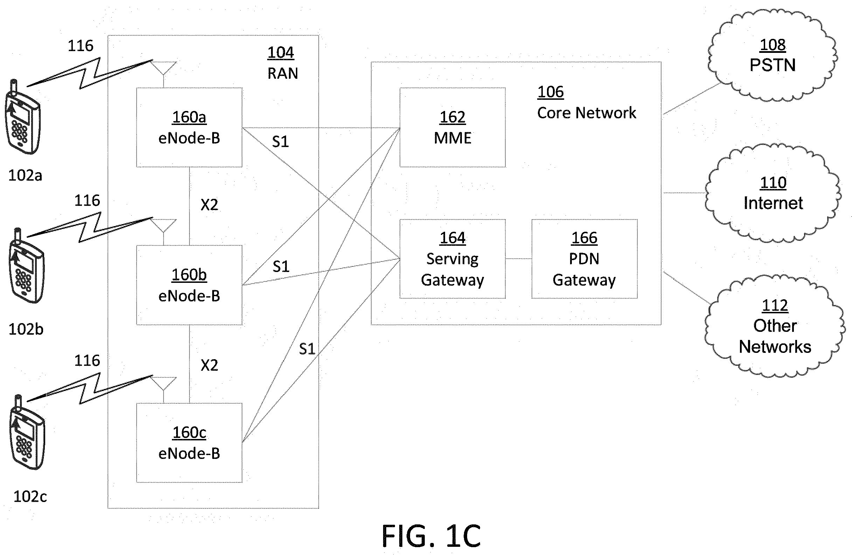

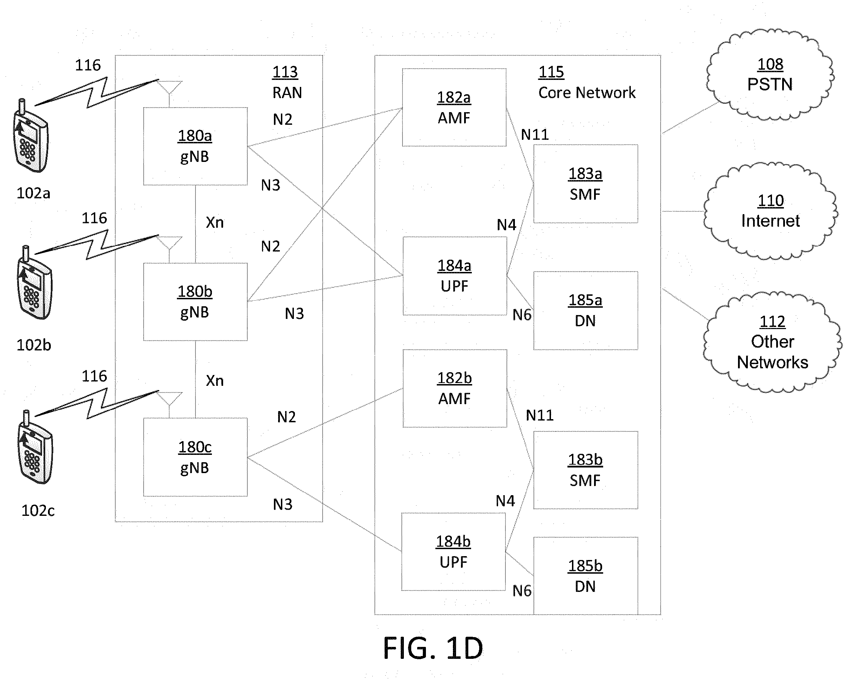

Some or all of the WTRUs 102a, 102b, 102c, 102d in the communications system 100 can include multi-mode capabilities (e.g., the WTRUs 102a, 102b, 102c, 102d can include multiple transceivers for communicating with different wireless networks over different wireless links). For example, the WTRU 102c shown in FIG. 1Acan be configured to communicate with the base station 114a, which can employ a cellular-based radio technology, and with the base station 114b, which can employ an IEEE 802 radio technology.

FIG. 1B is a system diagram illustrating an example WTRU 102. As shown in FIG. 1B, the WTRU 102 can include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 can include any sub-combination of the foregoing elements while remaining consistent with an embodiment.

The processor 118 can be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 can perform signal coding, data processing, power control, input/output processing, and/or any other functionality that enables the WTRU 102 to operate in a wireless environment. The processor 118 can be coupled to the transceiver 120, which can be coupled to the transmit/receive element 122. While FIG. 1B depicts the processor 118 and the transceiver 120 as separate components, it will be appreciated that the processor 118 and the transceiver 120 can be integrated together in an electronic package or chip.

The transmit/receive element 122 can be configured to transmit signals to, or receive signals from, a base station (e.g., the base station 114a) over the air interface 116. For example, in one embodiment, the transmit/receive element 122 can be an antenna configured to transmit and/or receive RF signals. In an embodiment, the transmit/receive element 122 can be an emitter/detector configured to transmit and/or receive IR, UV, or visible light signals, for example. In yet another embodiment, the transmit/receive element 122 can be configured to transmit and/or receive both RF and light signals. It will be appreciated that the transmit/receive element 122 can be configured to transmit and/or receive any combination of wireless signals.

Although the transmit/receive element 122 is depicted in FIG. 1B as a single element, the WTRU 102 can include any number of transmit/receive elements 122. More specifically, the WTRU 102 can employ MIMO technology. Thus, in one embodiment, the WTRU 102 can include two or more transmit/receive elements 122 (e.g., multiple antennas) for transmitting and receiving wireless signals over the air interface 116.

The transceiver 120 can be configured to modulate the signals that are to be transmitted by the transmit/receive element 122 and to demodulate the signals that are received by the transmit/receive element 122. As noted above, the WTRU 102 can have multi-mode capabilities. Thus, the transceiver 120 can include multiple transceivers for enabling the WTRU 102 to communicate via multiple RATs, such as NR and IEEE 802.11, for example.

The processor 118 of the WTRU 102 can be coupled to, and can receive user input data from, the speaker/microphone 124, the keypad 126, and/or the display/touchpad 128 (e.g., a liquid crystal display (LCD) display unit or organic light-emitting diode (OLED) display unit). The processor 118 can also output user data to the speaker/microphone 124, the keypad 126, and/or the display/touchpad 128. In addition, the processor 118 can access information from, and store data in, any type of suitable memory, such as the non-removable memory 130 and/or the removable memory 132. The non-removable memory 130 can include random-access memory (RAM), read-only memory (ROM), a hard disk, or any other type of memory storage device. The removable memory 132 can include a subscriber identity module (SIM) card, a memory stick, a secure digital (SD) memory card, and the like. In other embodiments, the processor 118 can access information from, and store data in, memory that is not physically located on the WTRU 102, such as on a server or a home computer (not shown).

The processor 118 can receive power from the power source 134, and can be configured to distribute and/or control the power to the other components in the WTRU 102. The power source 134 can be any suitable device for powering the WTRU 102. For example, the power source 134 can include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 can also be coupled to the GPS chipset 136, which can be configured to provide location information (e.g., longitude and latitude) regarding the current location of the WTRU 102. In addition to, or in lieu of, the information from the GPS chipset 136, the WTRU 102 can receive location information over the air interface 116 from a base station (e.g., base stations 114a, 114b) and/or determine its location based on the timing of the signals being received from two or more nearby base stations. It will be appreciated that the WTRU 102 can acquire location information by way of any suitable location-determination method while remaining consistent with an embodiment.

The processor 118 can further be coupled to other peripherals 138, which can include one or more software and/or hardware modules that provide additional features, functionality and/or wired or wireless connectivity. For example, the peripherals 138 can include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 can include one or more sensors, the sensors can be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 can include a full duplex radio for which transmission and reception of some or all of the signals (e.g., associated with particular subframes for both the UL (e.g., for transmission) and downlink (e.g., for reception) can be concurrent and/or simultaneous. The full duplex radio can include an interference management unit to reduce and or substantially eliminate self-interference via either hardware (e.g., a choke) or signal processing via a processor (e.g., a separate processor (not shown) or via processor 118). In an embodiment, the WTRU 102 can include a half-duplex radio for which transmission and reception of some or all of the signals (e.g., associated with particular subframes for either the UL (e.g., for transmission) or the downlink (e.g., for reception)).

FIG. 1C is a system diagram illustrating the RAN 104 and the CN 106 according to an embodiment. As noted above, the RAN 104 can employ an E-UTRA radio technology to communicate with the WTRUs 102a, 102b, 102c over the air interface 116. The RAN 104 can also be in communication with the CN 106.

The RAN 104 can include eNode-Bs 160a, 160b, 160c, though it will be appreciated that the RAN 104 can include any number of eNode-Bs while remaining consistent with an embodiment. The eNode-Bs 160a, 160b, 160c can each include one or more transceivers for communicating with the WTRUs 102a, 102b, 102c over the air interface 116. In one embodiment, the eNode-Bs 160a, 160b, 160c can implement MIMO technology. Thus, the eNode-B 160a, for example, can use multiple antennas to transmit wireless signals to, and/or receive wireless signals from, the WTRU 102a.

Each of the eNode-Bs 160a, 160b, 160c can be associated with a particular cell (not shown) and can be configured to handle radio resource management decisions, handover decisions, scheduling of users in the UL and/or DL, and the like. As shown in FIG. 1C, the eNode-Bs 160a, 160b, 160c can communicate with one another over an X2 interface.

The CN 106 shown in FIG. 1C can include a mobility management entity (MME) 162, a serving gateway (SGVη 164, and a packet data network (PDN) gateway (or PGW) 166. While each of the foregoing elements are depicted as part of the CN 106, it will be appreciated that any of these elements can be owned and/or operated by an entity other than the CN operator.

The MME 162 can be connected to each of the eNode-Bs 162a, 162b, 162c in the RAN 104 via an S1 interface and can serve as a control node. For example, the MME 162 can be responsible for authenticating users of the WTRUs 102a, 102b, 102c, bearer activation/deactivation, selecting a particular serving gateway during an initial attach of the WTRUs 102a, 102b, 102c, and the like. The MME 162 can provide a control plane function for switching between the RAN 104 and other RANs (not shown) that employ other radio technologies, such as GSM and/or WCDMA.

The SGW 164 can be connected to each of the eNode Bs 160a, 160b, 160c in the RAN 104 via the S1 interface. The SGW 164 can generally route and forward user data packets to/from the WTRUs 102a, 102b, 102c. The SGW 164 can perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 can be connected to the PGW 166, which can provide the WTRUs 102a, 102b, 102c with access to packet-switched networks, such as the Internet 110, to facilitate communications between the WTRUs 102a, 102b, 102c and IP-enabled devices.

The CN 106 can facilitate communications with other networks. For example, the CN 106 can provide the WTRUs 102a, 102b, 102c with access to circuit-switched networks, such as the PSTN 108, to facilitate communications between the WTRUs 102a, 102b, 102c and traditional land-line communications devices. For example, the CN 106 can include, or can communicate with, an IP gateway (e.g., an IP multimedia subsystem (IMS) server) that serves as an interface between the CN 106 and the PSTN 108. In addition, the CN 106 can provide the WTRUs 102a, 102b, 102c with access to the other networks 112, which can include other wired and/or wireless networks that are owned and/or operated by other service providers.

Although the WTRU is described in FIGS. 1A-1D as a wireless terminal, it is contemplated that in certain representative embodiments that such a terminal can use (e.g., temporarily or permanently) wired communication interfaces with the communication network.

In representative embodiments, the other network 112 can be a WLAN.

A WLAN in Infrastructure Basic Service Set (BSS) mode can have an Access Point (AP) for the BSS and one or more stations (STAs) associated with the AP. The AP can have an access or an interface to a Distribution System (DS) or another type of wired/wireless network that carries traffic in to and/or out of the BSS. Traffic to STAs that originates from outside the BSS can arrive through the AP and can be delivered to the STAs. Traffic originating from STAs to destinations outside the BSS can be sent to the AP to be delivered to respective destinations. Traffic between STAs within the BSS can be sent through the AP, for example, where the source STA can send traffic to the AP and the AP can deliver the traffic to the destination STA. The traffic between STAs within a BSS can be considered and/or referred to as peer-to-peer traffic. The peer-to-peer traffic can be sent between (e.g., directly between) the source and destination STAs with a direct link setup (DLS). In certain representative embodiments, the DLS can use an 802.11e DLS or an 802.11z tunneled DLS (TDLS). A WLAN using an Independent BSS (IBSS) mode cannot have an AP, and the STAs (e.g., all of the STAs) within or using the IBSS can communicate directly with each other. The IBSS mode of communication can sometimes be referred to herein as an "ad-hoc" mode of communication.

When using the 802.11 ac infrastructure mode of operation or a similar mode of operations, the AP can transmit a beacon on a fixed channel, such as a primary channel. The primary channel can be a fixed width (e.g., 20 MHz wide bandwidth) or a dynamically set width via signaling. The primary channel can be the operating channel of the BSS and can be used by the STAs to establish a connection with the AP. In certain representative embodiments, Carrier Sense Multiple Access with Collision Avoidance (CSMA/CA) can be implemented, for example in in 802.11 systems. For CSMA/CA, the STAs (e.g., every STA), including the AP, can sense the primary channel. If the primary channel is sensed/detected and/or determined to be busy by a particular STA, the particular STA can back off. One STA (e.g., only one station) can transmit at any given time in a given BSS.

High Throughput (HT) STAs can use a 40 MHz wide channel for communication, for example, via a combination of the primary 20 MHz channel with an adjacent or nonadjacent 20 MHz channel to form a 40 MHz wide channel.

Very High Throughput (VHT) STAs can support 20MHz, 40 MHz, 80 MHz, and/or 160 MHz wide channels. The 40 MHz, and/or 80 MHz, channels can be formed by combining contiguous 20 MHz channels. A 160 MHz channel can be formed by combining 8 contiguous 20 MHz channels, or by combining two non-contiguous 80 MHz channels, which can be referred to as an 80+80 configuration. For the 80+80 configuration, the data, after channel encoding, can be passed through a segment parser that can divide the data into two streams. Inverse Fast Fourier Transform (IFFT) processing, and time domain processing, can be done on each stream separately. The streams can be mapped on to the two 80 MHz channels, and the data can be transmitted by a transmitting STA. At the receiver of the receiving STA, the above described operation for the 80+80 configuration can be reversed, and the combined data can be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah can support Meter Type Control/Machine-Type Communications, such as MTC devices in a macro coverage area. MTC devices can have certain capabilities, for example, limited capabilities including support for (e.g., only support for) certain and/or limited bandwidths. The MTC devices can include a battery with a battery life above a threshold (e.g., to maintain a very long battery life).

WLAN systems, which can support multiple channels, and channel bandwidths, such as 802.11n, 802.11ac, 802.11af, and 802.11ah, include a channel which can be designated as the primary channel. The primary channel can have a bandwidth equal to the largest common operating bandwidth supported by all STAs in the BSS. The bandwidth of the primary channel can be set and/or limited by a STA, from among all STAs in operating in a BSS, which supports the smallest bandwidth operating mode. In the example of 802.11ah, the primary channel can be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings can depend on the status of the primary channel. If the primary channel is busy, for example, due to a STA (which supports only a 1 MHz operating mode), transmitting to the AP, the entire available frequency bands can be considered busy even though a majority of the frequency bands remains idle and can be available.

In the United States, the available frequency bands, which can be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

FIG. 1D is a system diagram illustrating the RAN 113 and the CN 115 according to an embodiment. As noted above, the RAN 113 can employ an NR radio technology to communicate with the WTRUs 102a, 102b, 102c over the air interface 116. The RAN 113 can also be in communication with the CN 115.

The RAN 113 can include gNBs 180a, 180b, 180c, though it will be appreciated that the RAN 113 can include any number of gNBs while remaining consistent with an embodiment. The gNBs 180a, 180b, 180c can each include one or more transceivers for communicating with the WTRUs 102a, 102b, 102c over the air interface 116. In one embodiment, the gNBs 180a, 180b, 180c can implement MIMO technology. For example, gNBs 180a, 108b can utilize beamforming to transmit signals to and/or receive signals from the gNBs 180a, 180b, 180c. Thus, the gNB 180a, for example, can use multiple antennas to transmit wireless signals to, and/or receive wireless signals from, the WTRU 102a. In an embodiment, the gNBs 180a, 180b, 180c can implement carrier aggregation technology. For example, the gNB 180a can transmit multiple component carriers to the WTRU 102a (not shown). A subset of these component carriers can be on unlicensed spectrum while the remaining component carriers can be on licensed spectrum. In an embodiment, the gNBs 180a, 180b, 180c can implement Coordinated Multi-Point (CoMP) technology. For example, WTRU 102a can receive coordinated transmissions from gNB 180a and gNB 180b (and/or gNB 180c).

The WTRUs 102a, 102b, 102c can communicate with gNBs 180a, 180b, 180c using transmissions associated with a scalable numerology. For example, the OFDM symbol spacing and/or OFDM subcarrier spacing can vary for different transmissions, different cells, and/or different portions of the wireless transmission spectrum. The WTRUs 102a, 102b, 102c can communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c can be configured to communicate with the WTRUs 102a, 102b, 102c in a standalone configuration and/or a non-standalone configuration. In the standalone configuration, WTRUs 102a, 102b, 102c can communicate with gNBs 180a, 180b, 180c without also accessing other RANs (e.g., such as eNode-Bs 160a, 160b, 160c). In the standalone configuration, WTRUs 102a, 102b, 102c can utilize one or more of gNBs 180a, 180b, 180c as a mobility anchor point. In the standalone configuration, WTRUs 102a, 102b, 102c can communicate with gNBs 180a, 180b, 180c using signals in an unlicensed band. In a non-standalone configuration WTRUs 102a, 102b, 102c can communicate with/connect to gNBs 180a, 180b, 180c while also communicating with/connecting to another RAN such as eNode-Bs 160a, 160b, 160c. For example, WTRUs 102a, 102b, 102c can implement DC principles to communicate with one or more gNBs 180a, 180b, 180c and one or more eNode-Bs 160a, 160b, 160c substantially simultaneously. In the non-standalone configuration, eNode-Bs 160a, 160b, 160c can serve as a mobility anchor for WTRUs 102a, 102b, 102c and gNBs 180a, 180b, 180c can provide additional coverage and/or throughput for servicing WTRUs 102a, 102b, 102c.

Each of the gNBs 180a, 180b, 180c can be associated with a particular cell (not shown) and can be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c can communicate with one another over an Xn interface.

The CN 115 shown in FIG. 1D can include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements can be owned and/or operated by an entity other than the CN operator.

The AMF 182a, 182b can be connected to one or more of the gNBs 180a, 180b, 180c in the RAN 113 via an N2 interface and can serve as a control node. For example, the AMF 182a, 182b can be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing can be used by the AMF 182a, 182b in order to customize CN support for WTRUs 102a, 102b, 102c based on the types of services being utilized WTRUs 102a, 102b, 102c. For example, different network slices can be established for different use cases such as services relying on ultra-reliable low latency (URLLC) access, services relying on enhanced massive mobile broadband (eMBB) access, services for machine type communication (MTC) access, and/or the like. The AMF 162 can provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b can be connected to an AMF 182a, 182b in the CN 115 via an N11 interface. The SMF 183a, 183b can also be connected to a UPF 184a, 184b in the CN 115 via an N4 interface. The SMF 183a, 183b can select and control the UPF 184a, 184b and configure the routing of traffic through the UPF 184a, 184b. The SMF 183a, 183b can perform other functions, such as managing and allocating UE IP address, managing PDU sessions, controlling policy enforcement and QoS, providing downlink data notifications, and the like. A PDU session type can be IP-based, non-IP based, Ethernet-based, and the like.

The UPF 184a, 184b can be connected to one or more of the gNBs 180a, 180b, 180c in the RAN 113 via an N3 interface, which can provide the WTRUs 102a, 102b, 102c with access to packet-switched networks, such as the Internet 110, to facilitate communications between the WTRUs 102a, 102b, 102c and IP-enabled devices. The UPF 184, 184b can perform other functions, such as routing and forwarding packets, enforcing user plane policies, supporting multi-homed PDU sessions, handling user plane QoS, buffering downlink packets, providing mobility anchoring, and the like.

The CN 115 can facilitate communications with other networks. For example, the CN 115 can include, or can communicate with, an IP gateway (e.g., an IP multimedia subsystem (IMS) server) that serves as an interface between the CN 115 and the PSTN 108. In addition, the CN 115 can provide the WTRUs 102a, 102b, 102c with access to the other networks 112, which can include other wired and/or wireless networks that are owned and/or operated by other service providers. In one embodiment, the WTRUs 102a, 102b, 102c can be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, can be performed by one or more emulation devices (not shown). The emulation devices can be one or more devices configured to emulate one or more, or all, of the functions described herein. For example, the emulation devices can be used to test other devices and/or to simulate network and/or WTRU functions.

The emulation devices can be designed to implement one or more tests of other devices in a lab environment and/or in an operator network environment. For example, the one or more emulation devices can perform the one or more, or all, functions while being fully or partially implemented and/or deployed as part of a wired and/or wireless communication network in order to test other devices within the communication network. The one or more emulation devices can perform the one or more, or all, functions while being temporarily implemented/deployed as part of a wired and/or wireless communication network. The emulation device can be directly coupled to another device for purposes of testing and/or can performing testing using over-the-air wireless communications.

The one or more emulation devices can perform the one or more, including all, functions while not being implemented/deployed as part of a wired and/or wireless communication network. For example, the emulation devices can be utilized in a testing scenario in a testing laboratory and/or a non-deployed (e.g., testing) wired and/or wireless communication network in order to implement testing of one or more components. The one or more emulation devices can be test equipment. Direct RF coupling and/or wireless communications via RF circuitry (e.g., which can include one or more antennas) can be used by the emulation devices to transmit and/or receive data.

This application describes a variety of aspects, including tools, features, examples, models, approaches, etc. Many of these aspects are described with specificity and, at least to show the individual characteristics, are often described in a manner that can sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. The figures provided herein can provide some examples, but other examples are contemplated. The discussion of the figures does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable medium (e.g., storage medium) comprising (e.g., having stored thereon) instructions for encoding or decoding video data according to any of the methods described, and/or a computer readable storage medium having stored thereon a bitstream generated according to any of the methods described. When referred to herein, a bitstream can refer to transmitted data, but can also refer to data that is stored, generated, and/or accessed without being transmitted (e.g., non-transitory data).

In the present application, the terms "reconstructed" and "decoded" can be used interchangeably, the terms "pixel" and "sample" can be used interchangeably, the terms "image," "picture" and "frame" can be used interchangeably.

Various methods are described herein, and each of the methods comprises one or more steps or actions for achieving the described method. Unless a specific order of steps or actions is required for proper operation of the method, the order and/or use of specific steps and/or actions can be modified or combined. Additionally, terms such as "first", "second", etc. can be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and can occur, for example, before, during, or in an overlapping time period with the second decoding.

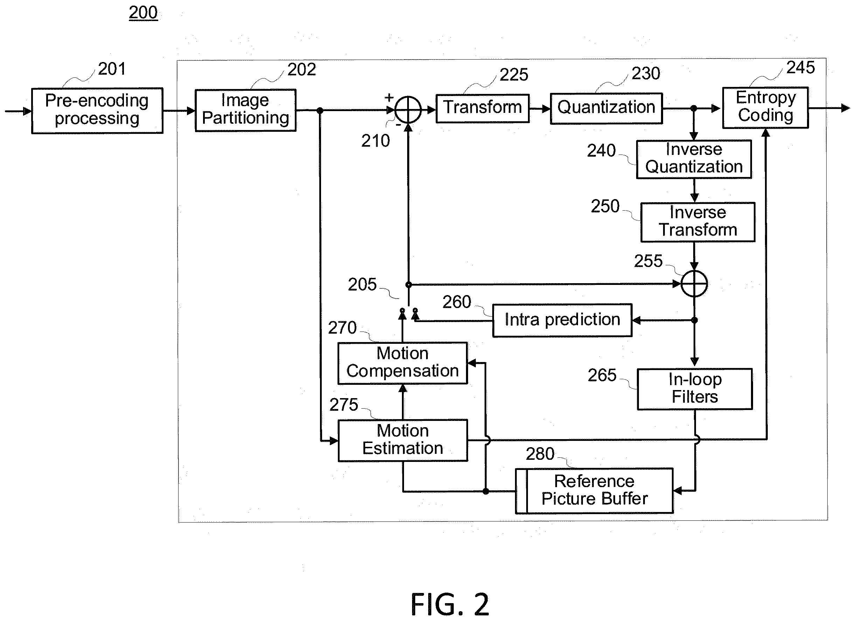

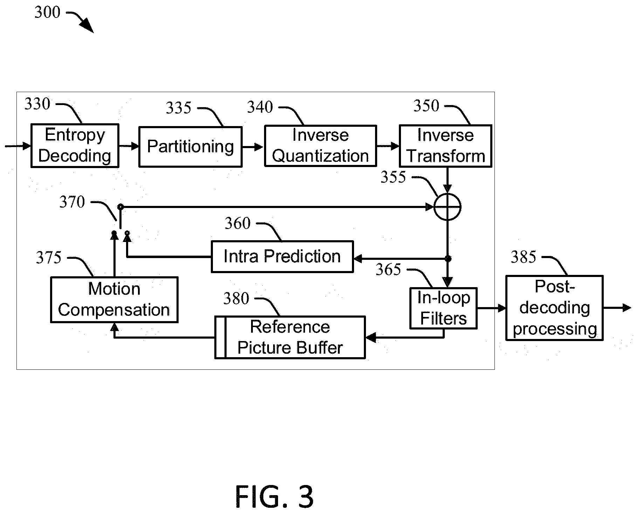

Various methods and other aspects described in this application can be used to modify modules, for example, decoding modules, of a video encoder 200 and decoder 300 as shown in FIG. 2 and FIG. 3. Moreover, the subject matter disclosed herein can be applied, for example, to any type, format or version of video coding, whether described in a standard or a recommendation, whether pre-existing or future-developed, and extensions of any such standards and recommendations. Unless indicated otherwise, or technically precluded, the aspects described in this application can be used individually or in combination.

Various numeric values are used in examples described in the present application. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence can go through pre-encoding processing 201, for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing, and attached to the bitstream.

In the encoder 200, a picture is encoded by the encoder elements as described below. The picture to be encoded is partitioned 202 and processed in units of, for example, coding units (CUs). Each unit is encoded using, for example, either an intra or inter mode. When a unit is encoded in an intra mode, it performs intra prediction 260. In an inter mode, motion estimation 275 and compensation 270 are performed. The encoder decides 205 which one of the intra mode or inter mode to use for encoding the unit, and indicates the intra/inter decision by, for example, a prediction mode flag. Prediction residuals are calculated, for example, by subtracting 210 the predicted block from the original image block.

The prediction residuals are then transformed 225 and quantized 230. The quantized transform coefficients, as well as motion vectors and other syntax elements, are entropy coded 245 to output a bitstream. The encoder can skip the transform and apply quantization directly to the non-transformed residual signal. The encoder can bypass both transform and quantization, e.g.,, the residual is coded directly without the application of the transform or quantization processes.

The encoder decodes an encoded block to provide a reference for further predictions. The quantized transform coefficients are de-quantized 240 and inverse transformed 250 to decode prediction residuals. Combining 255 the decoded prediction residuals and the predicted block, an image block is reconstructed. In-loop filters 265 are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded 330 to obtain transform coefficients, motion vectors, and other coded information. The picture partition information indicates how the picture is partitioned. The decoder can therefore divide 335 the picture according to the decoded picture partitioning information. The transform coefficients are de-quantized 340 and inverse transformed 350 to decode the prediction residuals. Combining 355 the decoded prediction residuals and the predicted block, an image block is reconstructed. The predicted block can be obtained 370 from intra prediction 360 or motion-compensated prediction (e.g.,, inter prediction) 375. In-loop filters 365 are applied to the reconstructed image. The filtered image is stored at a reference picture buffer 380.

The decoded picture can further go through post-decoding processing 385, for example, an inverse color transform (e.g., conversion from YCbCr 4:2:0 to RGB 4:4:4) or an inverse remapping performing the inverse of the remapping process performed in the pre-encoding processing 201. The post-decoding processing can use metadata derived in the pre-encoding processing and signaled in the bitstream. In an example, the decoded images (e.g., after application of the in-loop filters 365 and/or after post-decoding processing 385, if post-decoding processing is used) can be sent to a display device for rendering to a user.

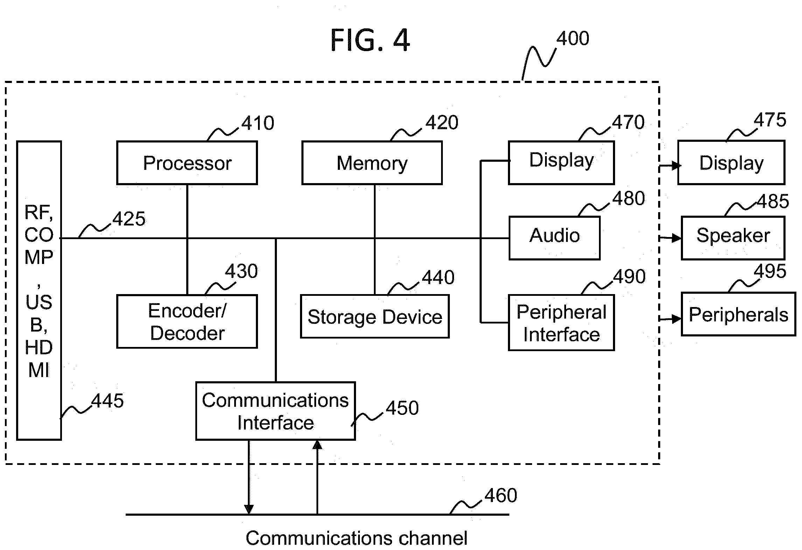

FIG. 4 is a diagram showing an example of a system in which various aspects and examples described herein can be implemented. System 400 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, can be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that can be included in a device to perform the encoding and/or decoding functions. As is known, a device can include one or both of the encoding and decoding modules. Additionally, encoder/decoder module 430 can be implemented as a separate element of system 400 or can be incorporated within processor 410 as a combination of hardware and software as known to those skilled in the art.

Program code to be loaded onto processor 410 or encoder/decoder 430 to perform the various aspects described in this document can be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device can be either the processor 410 or the encoder/decoder module 430) is used for one or more of these functions. The external memory can be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 can be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, can be implemented, for example, within a separate input processing IC or within processor 410 as necessary. Similarly, aspects of USB or HDMI interface processing can be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 can be provided within an integrated housing, Within the integrated housing, the various elements can be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 can be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth^{®} network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 can be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices can be communicatively coupled to system 400 via dedicated connections through respective interfaces 470, 480, and 490. Alternatively, the output devices can be connected to system 400 using the communications channel 460 via the communications interface 450. The display 475 and speakers 485 can be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal can be provided via dedicated output connections, including, for example, HDMI ports, USB ports, or COMP outputs.

The examples can be carried out by computer software implemented by the processor 410 or by hardware, or by a combination of hardware and software. As a non-limiting example, the examples can be implemented by one or more integrated circuits. The memory 420 can be of any type appropriate to the technical environment and can be implemented using any appropriate data storage technology, such as optical memory devices, magnetic memory devices, semiconductor-based memory devices, fixed memory, and removable memory, as non-limiting examples. The processor 410 can be of any type appropriate to the technical environment, and can encompass one or more of microprocessors, general purpose computers, special purpose computers, and processors based on a multi-core architecture, as non-limiting examples.

Various implementations include decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations include encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application can refer to "determining" various pieces of information. Determining the information can include one or more of, for example, estimating the information, calculating the information, predicting the information, or retrieving the information from memory. Obtaining can include receiving, retrieving, constructing, generating, and/or determining.

Further, this application can refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application can refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This can be extended, as is clear to one of ordinary skill in this and related arts, for as many items as are listed.

Also, as used herein, the word "signal" refers to, among other things, indicating something to a corresponding decoder. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various examples. It is to be appreciated that signaling can be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described example. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on, or accessed or received from, a processor-readable medium.

Many examples are described herein. Features of examples can be provided alone or in any combination, across various claim categories and types. Further, examples can include one or more of the features, devices, or aspects described herein, alone or in any combination, across various claim categories and types. For example, features described herein can be implemented in a bitstream or signal that includes information generated as described herein. The information can allow a decoder to decode a bitstream, the encoder, bitstream, and/or decoder according to any of the embodiments described. For example, features described herein can be implemented by creating and/or transmitting and/or receiving and/or decoding a bitstream or signal. For example, features described herein can be implemented a method, process, apparatus, medium storing instructions (e.g., computer-readable medium), medium storing data, or signal. For example, features described herein can be implemented by a TV, set-top box, cell phone, tablet, or other electronic device that performs decoding. The TV, set-top box, cell phone, tablet, or other electronic device can display (e.g., using a monitor, screen, or other type of display) a resulting image (e.g., an image from residual reconstruction of the video bitstream). The TV, set-top box, cell phone, tablet, or other electronic device can receive a signal including an encoded image and perform decoding.

According to embodiments of the present disclosure, the pose of a trackable (e.g., a trackable object) may be transmitted from a WTRU to a server over a network. When referred to herein, a trackable (e.g., a trackable object) may include a model of an element of the real world, of which features may be available and/or extracted. The trackable may provide a local reference space in which an anchor pose may be expressed. The pose of the trackable may be transmitted, for example, when a rendering task is delegated from the WTRU (e.g., which may be a lightweight extended reality (XR) WTRU) to the server (e.g., which may be a split rendering server). The pose of the trackable may be used by the server to position a virtual object before rendering a scene. The transmission operations may include determining one or more trackables (e.g., related to an XR experience), configuring support for the trackables, and/or transmitting pose data associated with the trackables.

When referred to herein, a WTRU may include an XR device/node of various form factors. The WTRU (e.g., XR WTRU) may include but may not be limited to a head mounted display (HMD), optical see-through glasses and/or video see-through HMDs for augmented reality (AR) and/or mixed reality (MR), a mobile device with positional tracking capabilities and/or a camera, a wearable device, etc. The WTRU may include components and/or units configured to performed XR functions, such as, e.g., one or more displays, one or more cameras, one or more sensors, one or more sensor processing units, one or more wireless connectivity units, one or more XR/Media processing unit, and/or one or more power supplies. The XR functions may be provided by one or more devices, wearables, actuators, controllers and/or accessories. One or more devices, nodes, and/or WTRUs may be grouped into a collaborative group for supporting XR applications, experiences, and/or services.

In an AR setting or experience, virtual content may be inserted into a user-realistic environment via one or more optical or video see-through XR devices. Knowledge about the user realistic environment may be built based on sensor data using XR spatial computing functions, such as, e.g., simultaneous localization and mapping (SLAM) for spatial mapping (e.g., creating a map of a surrounding area), localization (e.g., establishing the poses of users and/or objects within a space), 3D reconstruction, and/or semantic perception.

AR anchoring may be defined based on trackable and/or anchor entities (e.g., to establish the poses of virtual objects in a user realistic environment). A trackable as described herein may refer to a model of an element of the real world, of which features may be available and/or extracted. A trackable may provide a local reference space in which an anchor pose may be expressed.

When referred to herein, an anchor may include a real-world pose, which may be identified based on one or more trackables. A (e.g., each) anchor may provide a local reference space in which a pose may be expressed. The local reference space may be derived from a trackable local reference space using a (e.g., pre-defined) 3D transformation.

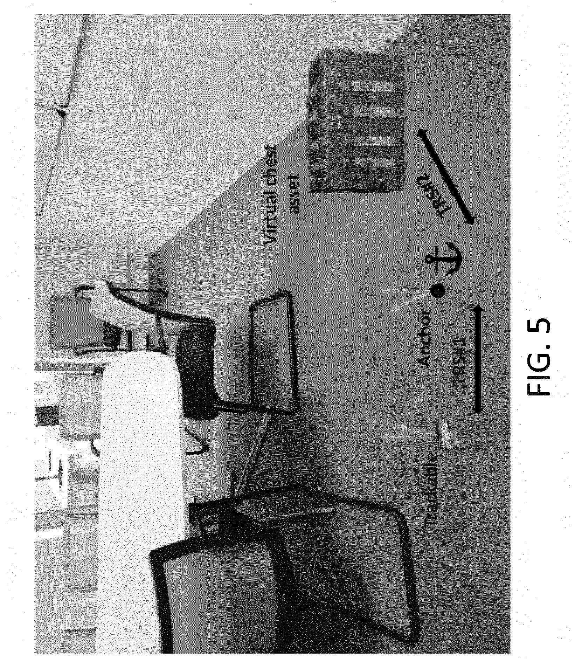

FIG. 5 illustrates examples of spatial relationships between a trackable, an AR anchor and a virtual asset.

Example semantics related to anchor(s) and/or trackable objects are respectively illustrated in Table 1 and Table 2 below.

**Table 1: Example semantics associated with an anchor object**

| Name | Type | Usage | Default | Description |
|---|---|---|---|---|
| trackable | Number | M | | Index of a trackable in a trackables array that may be used for this anchor. |
| requiresAnchoring | Boolean | M | | If TRUE, the application may skip the virtual assets attached to this anchor until the pose of this anchor in the real world is known. |
| | | | | if FALSE, an application may process the virtual assets attached to this anchor |
| minimumRequiredSpac e (x, y, z) | Array(number ) | O | (0,0,0) | Space for anchoring an AR asset (x, y, z in meters). This space may correspond to an axis-aligned bounding box expressed in a trackable local space. This value may be compared to the bounding box of the real available space determined by the application. |
| aligned | enumeration | O | NOT_USED | The aligned flag may take one of the following values: NOT_USED=0, ALIGNED_NOTSCA LED=1, ALIGNED_SCALED =2. |
| | | | | If ALIGNED_SCALED is set, the bounding box of the virtual assets attached to that anchor may be aligned and scaled to match the bounding box of the real available space determined by an application. |
| actions | Array(Action) | O | | Indices of the actions in the actions array of an interactivity extension to be executed once the pose of this anchor is determined. An example is a setTransform action to place the virtual assets attached to that anchor. |
| light | integer | N/A | O | Reference to an item in the lights array of the MPEG_lights_textur e_based extension. |

**Table 2: Example semantics associated with a trackable object**

| **Name** | **Type** | **Usag e** | **Default** | **Description** | |
|---|---|---|---|---|---|
| type | enumerati on | M | GEOMET RIC | the type flag may take one of the following values: | |
| | | | | TRACKABLE_FLOOR=0, | |
| | | | | TRACKABLE_VIEWER=1, | |
| | | | | TRACKABLE_CONTROLLER=2, | |
| | | | | TRACKABLE_GEOMETRIC=3, | |
| | | | | TRACKABLE_MARKER_2D=4, | |
| | | | | TRACKABLE_MARKER_3D=5, | |
| | | | | TRACKABLE_MARKER_GEO=6, | |
| | | | | TRACKABLE_APPLICATION=7 | |
| if (type == TRACKABLE_FL OOR) { | | | | Specifies a trackable that may be mapped to a viewer's floor. This may correspond to an OpenXR stage reference space. | |
| } | | | | | |
| if (type == TRACKABLE _VI EWER) { | | | | | Specifies a trackable that may be mapped to a viewer's origin in the forward direction for the viewer. This may correspond to an OpenXR View reference space. |
| } | | | | | |
| if (type == TRACKABLE_CO NTROLLER) { | | | | | Specifies a trackable that may be mapped to a controller. This may correspond to one of the OpenXR action spaces. |
| | path | string | M | | a path that describes the action space as specified by OpenXR. An example is "/user/hand/left/input" |
| } | | | | | |
| if (type== TRACKABLE_GE OMETRIC) { | | | | | |
| geometricConstra int | | enumerati on | M | HORIZO NTAL_PL ANE | the geometricConstraint flag may take one of the following values: HORIZONTAL_PLANE=0, VERTICAL_PLANE=1 |
| } | | | | | |
| if (type== TRACKABLE_MA RKER_2D OR MARKER_3D) { | | | | | |
| | markerNode | number | M | | Index to the node in the nodes array in which the marker geometry and texture are described |
| } | | | | | |
| if (type== TRACKABLE_MA RKER_GEO) { | | | | | |
| | geoCoordinate | number | M | N/A | index to geo coordinate item in array in MPEG_GEO_COORDINATES extension |
| } | | | | | |
| if (type== TRACKABLE_AP PLICATION) { | | | | | |
| | trackable_id | string | M | | An application-defined trackable id, that is known to the application. |
| } | | | | | |

A cross-platform access may be provided (e.g., directly) to diverse XR device runtimes on multiple platforms. Applications and/or engines may be enabled to run on a system that exposes an OpenXR API. An XR application may use the OpenXR API for various purposes including, e.g., initializing/configuring an AR runtime with a trackable to be detected and tracked. The initialization and/or configuration may include, for example, setting a floor as a trackable (e.g., by using xrCreateReferenceSpaceQ with the XR_REFERENCE_SPACE_TYPE_STAGE value of the XrReferenceSpaceType enum), setting a trackable related to an arbitrary free space point in a user-realistic environment (e.g., by using xrCreateSpatialAnchorFB() and xrCreateSpatialAnchorMSFTQ), and/or setting a 2D marker as a trackable (e.g., by using xrCreateMarkerSpaceVARJO()).

An XR application may use the OpenXR API to obtain predicted pose information of a trackable. This may be accomplished, for example, by using xrLocateSpace() and/or by retrieving the XrPosef information (e.g., position and orientation of the origin of a trackable expressed in its base/parent space) from the XrSpaceLocation structure.

An XR application may use the OpenXR API to obtain the available 2D area or 3D volume (e.g., free of obstacle) around the real environment of a trackable, for example, for inserting virtual content without occlusion from real objects. The 2D area or 3D volume may be determined, for example, by using xrGetReferenceSpaceBounds() and/or by retrieving the XrExtend2df information, such as, e.g., the width and the height of an available rectangular area.

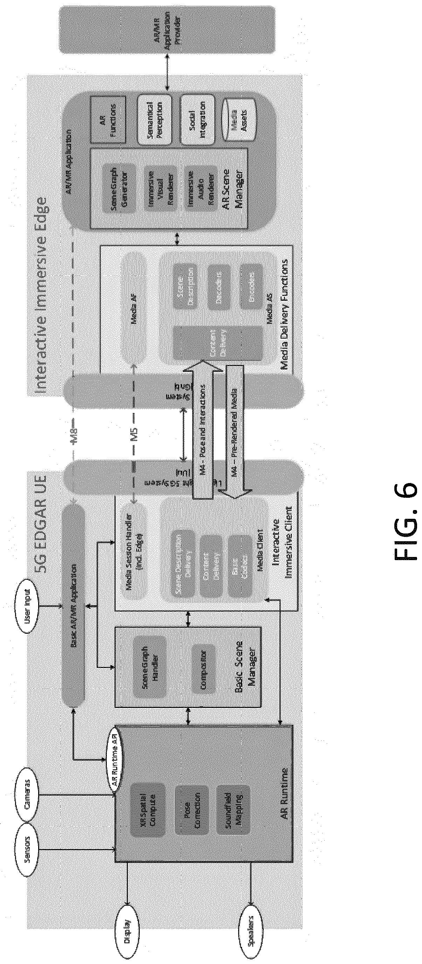

A split rendering media service enabler (SR_MSE) may be used. A set of media functions may be collected to build the SR_MSE to enable the realization of split rendered applications. Different degrees of split workflows between AR devices and a cloud/edge may be defined. The SR_MSE may use an edge dependent AR WTRU (EDGAR) architecture as shown in FIG. 6, where multiple XR functions (e.g., rendering) may be performed on the cloud/edge.

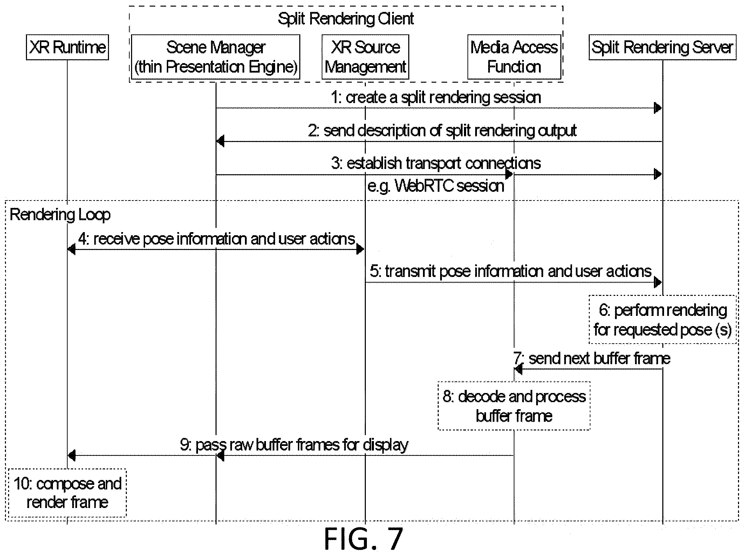

FIG. 7 illustrates an example of a high-level call flow for split rendering setup and operation between a WTRU and a server.

The data to be transmitted in an uplink (e.g., from a WTRU to a server) for a split rendering setup and/or operations within a rendering loop may include one or more of the following. Table 3 shows examples of configuration data that may be used during a split rendering session setup. The data may be static (e.g., not evolving with time) during a split rendering operation.

**Table 3: Examples of split rendering configuration data**

| Name | Type | | Cardina lity | Description | |
|---|---|---|---|---|---|
| renderingFlags | Array(SR_CONFIG_F LAGS) | | 0..1 | Provides a set of flags to activate/deactivate selected rendering functions. The defined SR_CONFIG_FLAGS are: | |
| | | | | | • FLAG_ALPHA_BLENDIN G |
| | | | | | • FLAG_DEPTH_COMPOSI TION |
| | | | | | • FLAG_EYE_GAZE_TRAC KING |
| spaceConfiguratio n | | Object | 0..1 | The space configuration may be sent by a split rendering server to a split rendering client. Upon reception of this information, the SR client may use the information to create reference and action spaces as well as to agree on common identifiers for XR spaces. | |
| referenceSpaces | | Array | 0..1 | An array of reference spaces and their identifiers. | |
| | id | number | 1..1 | A unique identifier of the XR space in the context of the split rendering session. | |
| | refSpace | enum | 1..1 | One of the defined reference spaces in OpenXR. These may be: XR_REFERENCE_SPACE_TYP E_VIEW, | |
| | | | | XR_REFERENCE_SPACE_TYP E_LOCAL, or | |
| | | | | XR_REFERENCE_SPACE_TYP E_STAGE. | |
| actionSpaces | | Array | 0..1 | An array of action spaces that may be defined by a split rendering client in an XR session. | |
| | id | number | 1..1 | A unique identifier of an XR space in the context of a split rendering session. | |
| | actionld | number | 1..1 | Provides the unique identifier of an action. | |
| subactionPath | | string | 1..1 | The subaction path identifies the action, which can then be mapped by the XR runtime to user input modalities. | |
| | initialPose | Pose | 0..1 | Provides the initial pose of the new XR space's origin. | |
| viewConfiguration | | Object | 0..1 | Conveys the view configuration that is configured for the XR session. | |
| | type | Enum | 1..1 | The type indicates the view configuration. Defined values are MONO and STEREO. Other values may be added. | |
| | width | number | 1..1 | The recommended width of a swapchain image. | |
| | height | number | 1..1 | The recommended height of a swapchain image. | |
| compositionLayer | | string | 1..1 | An identifier of a selected composition layer. | |
| environmentBlend Mode | | enum | 1..1 | The type indicates an environment blend mode configuration. Defined values are OPAQUE, ADDITIVE and ALPHA_BLEND. Other values may be added. | |
| actionConfiguratio n | | Array | 0..1 | This contains a list of the actions that may be defined by an SR client. | |
| | action | Object | 1..n | A definition of a single action object. | |
| | id | number | 1..1 | A unique identifier of an action. | |
| | action Type | enum | 1..1 | The type of an action state. This can be a Boolean, float, vector2, pose, vibration output, etc. | |
| subactionPaths | | string | 1..n | An array of subaction paths associated with this action. The split rendering client may provide the state of all defined sub-action paths. | |
| extraConfiguration s | | Object | 0..1 | A placeholder for addition configuration information. | |

The data transmitted by a WTRU during a rendering loop may be time evolving (e.g., change from one rendering frame to another rendering frame). Table 4 illustrates examples of pose data.

**Table 4: Examples of split rendering pose data**

| **Name** | | **Type** | **Cardinality** | | **Description** | |
|---|---|---|---|---|---|---|
| poseInfo | | Object | 1..n | | An array of pose information objects, each corresponding to a target display time and XR space. | |
| | displayTime | number | 1..1 | | The time for which the current view poses are predicted. | |
| | xrSpace | number | 0..1 | | An identifier for the XR space in which the view poses are expressed. The set of XR spaces may be agreed on between a split rendering client and a split rendering server at the setup of a split rendering session. | |
| | | | | | The set of XR spaces may be negotiated as part of the split rendering configuration. | |
| | viewPoses | Object | 0..n | | An array that provides a list of the poses associated with a view. The number of views may be determined during the split rendering session setup between a split rendering client and a server, depending on the view configuration of an XR session. | |
| | pose | | Object | 1..1 | An object that carries the pose information for a particular view. | |
| orientation | | | Object | 1..1 | Represents the orientation of a view pose as a quaternion based on a reference XR space. | |
| x | | | number | 1..1 | Provides the x coordinate of a quaternion. | |
| y | | | number | 1..1 | Provides the y coordinate of a quaternion. | |
| z | | | number | 1..1 | Provides the z coordinate of a quaternion. | |
| w | | | number | 1..1 | Provides the w coordinate of a quaternion. | |
| | position | | Object | 0..1 | Represents the location in 3D space of the pose based on the reference XR space. | |
| | | | | | For eye gaze poses, the position may or may not be required. | |
| x | | | number | 1..1 | Provides the x coordinate of a position vector. | |
| y | | | number | 1..1 | Provides the y coordinate of a position vector. | |
| z | | | number | 1..1 | Provides the z coordinate of a position vector. | |
| | confidence | | number | 0..1 | This parameter provides a confidence score that reflects the probability for this pose prediction to be correct. For the current pose or a pose in the past, the confidence value may be 1. The confidence can take a value between 0 and 1. | |
| | | | | | If not provided by the XR runtime, this field may be estimated by the SRC or omitted. | |
| | fov | | Object | 1..1 | Indicates the four sides of the field of view used for the projection of a corresponding XR view. | |
| | | angleLeft | number | 1..1 | The angle of the left side of the field of view. For a symmetric field of view this value may be negative. | |
| | | angleRight | number | 1..1 | The angle of the right side of the field of view. | |
| | | angleUp | number | 1..1 | The angle of the top part of the field of view. | |
| | | angleDown | number | 1..1 | The angle of the bottom part of the field of view. For a symmetric field of view this value may be negative. | |

Media capabilities for augmented reality (MeCAR) may be addressed. Supported media formats, codecs, processing functions may be defined, for example, per AR device category. MeCAR may specify an available visualization space format (e.g., in addition to the split rendering data described herein). The available visualization space may correspond to a three-dimensional space within a user's real-word space that may be suitable for rendering virtual objects. The virtual objects may remain within the defined available visualization space.

Table 5 illustrates example semantics associated with split rendering pose available visualization space data that may as specify as part of MeCAR.

**Table 5: Examples of split rendering Split rendering pose available visualization space data**

| **Name** | | | **Type** | **Cardinality** | **Description** |
|---|---|---|---|---|---|
| availableVisualizationSpace | | | Object | 0..1 | An object defining the coordinate of the available visualization space. |
| | cuboid | | Object | 0..1 * | The available visualization space in form of cuboid |
| | | x | float | 1 | Offset of the available visualization space starting point in the x direction as defined by the Open XR coordinate system in meters. |
| | | | | | The value may be in meters. |
| | | y | float | 1 | Offset of the available visualization space starting point in the y direction as defined by the Open XR coordinate system. |
| | | | | | The value may be in meters. |
| | | z | float | 1 | Offset of the available visualization space starting point in the z direction as defined by the Open XR coordinate system. |
| | | | | | The value may be in meters. |
| | | width | float | 1 | The width of available visualization space in the x direction as defined by the Open XR coordinate system. |
| | | | | | The value may be in meters. |
| | | height | float | 1 | The height of available visualization space in the y direction as defined by the Open XR coordinate system. |
| | | | | | The value may be in meters. |
| | | depth | float | 1 | The depth of available visualization space in the z direction as defined by the Open XR coordinate system. |
| | | | | | The value may be in meters. |
| | | sphere | Object | 0..1* | The available visualization space in form of cuboid |
| | | x | float | 1 | Offset of the available visualization space center in the x direction as defined by the Open XR coordinate system. |
| | | | | | The value may be in meters. |
| | | y | float | 1 | Offset of the available visualization space center in the y direction as defined by the Open XR coordinate system. |
| | | | | | The value may be in meters. |
| | | z | float | 1 | Offset of the available visualization space center in the z direction as defined by |
| | | | | | the Open XR coordinate system. |
| | | | | | The value may be in meters. |
| | | radius | float | 1 | The radius of available visualization space as defined by the Open XR coordinate system. |
| | | | | | The value may be in meters. |
| *One (e.g., only one) of cuboid or sphere object may exist. | | | | | |

The SR_MSE configuration data structure of Table 3 may support trackables of various types including the XR_REFERENCE_SPACE_TYPE_VIEW and XR_REFERENCE_SPACE_TYPE_STAGE of the OpenXR reference spaces. An XR_REFERENCE_SPACE_TYPE_LOCAL reference space may or may not be considered a trackable space because this space may correspond to an initial position and orientation of a WTRU (e.g., the pose of the WTRU when an XR application starts). For one or more spaces (e.g., for each space) of a referenceSpaces array, a unique identifier and/or space type may be provided.

The term of referenceSpaces may be clarified to ensure the support of trackables in the SR_MSE configuration data structure described herein. Other types of trackable (e.g., as defined in Table 2) may be supported.

Data related to view poses and actions may be transmitted to a split rendering server. Data related to the pose of a (e.g., each) trackable may be used by the split rendering server (e.g., for correct positioning of virtual objects within a user-realistic environment before rendering) and therefore may also be transmitted. For example, the pose of a dynamic trackable (e.g., whose pose may be continuously varying) and/or a static trackable (e.g., whose pose may be fixed with respect to its base or a parent base) may be transmitted. For the static trackable, the estimation of its pose may be refined and may become more accurate during a XR session (e.g., a user may come closest to the trackable and features associated with the trackable may be extracted with higher precision). In an example of MeCAR, a (e.g., a single) available visualization space may be defined for an AR scene (e.g., a whole AR scene). A (e.g., each) trackable may have a specific available space. An AR scene may contain several trackables and related AR anchors (e.g., a virtual content may be anchored to a particular location of the user's environment as another virtual content may be anchored to another location). The available visualization space may be defined for a (e.g., each) trackable and an array of these spaces may be transmitted in the split rendering data. The trackables associated with an XR experience may be identified, support for these trackables may be configured, and pose data associated with the trackables may be transmitted over a network (e.g., to a server).

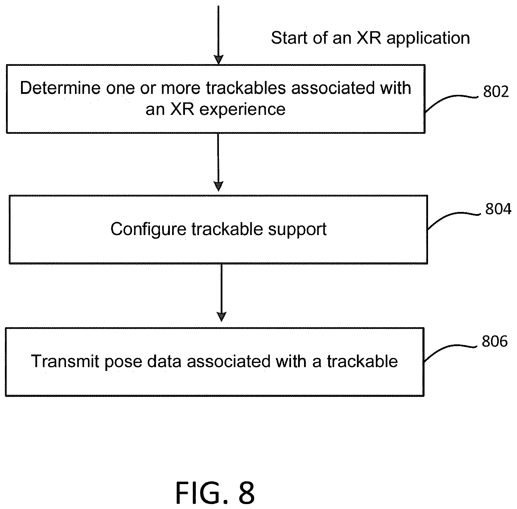

The techniques disclosed herein may be employed by various AR runtime APIs including OpenXR API and/or other runtime APIs that may be used to retrieve AR runtime information (e.g., the trackable information of split rendering data). FIG. 8 illustrates example operations that may be performed by a WTRU. At 802 of FIG. 8, the WTRU may determine one or more trackables that may be associated with an XR experience. This operation may be performed (e.g., once) after the start of an XR application, when the WTRU may receive information regarding the trackables. The information regarding the trackables may be provided, for example, via an initial scene description file transmitted by an XR server hosting the XR experience, via an updated scene description file transmitted by a split rendering server during a split rendering setup phase, or via a configuration data structure received during the split rendering session setup phase. The scene description file (e.g., an MPEG-I scene description file including information shown in Table 1 and Table 2) may include a list of trackables, the type of each trackable, spatial information associated with the trackables (e.g., the origin and/or axes of a trackable base), and/or tracking information (e.g., the image and/or size of a 2D marker) on the trackables that may be used by the XR experience.

At 804 of FIG. 8, the WTRU may configure support for the trackables. This operation may be performed (e.g., once) within a configuration stage after the determination of the trackables. The configuration may be performed at the WTRU and/or the relevant split rendering server. For example, on the WTRU side, the XR application providing the XR experience may configure an AR runtime of the WTRU to detect and track the trackables based on the information collected in the previous step. The AR runtime may be configured to use a space creation function based on the type of the trackables, such as setting a floor as a trackable (e.g., using xrCreateReferenceSpace() with the XR_REFERENCE_SPACE_TYPE_STAGE value of the XrReferenceSpaceType enum), setting a trackable related to an arbitrary free space point in a user-realistic environment (e.g., using xrCreateSpatialAnchorFB() and xrCreateSpatialAnchorMSFT()), setting a 2D marker as a trackable (e.g., using xrCreateMarkerSpaceVARJO()), etc.

A WTRU may determine an available 2D area or 3D volume free of obstacle around the real environment of a trackable, for example, once the AR runtime is configured to detect and track the trackable. In examples, the 2D area may be represented by an axis-aligned rectangular surface (e.g., with related width and height parameters) and centered at the origin of the local space of the trackable. In examples, the 2D area may be represented by a disk of radius R centered at the origin of the local space of the trackable. In examples, the rectangular or disk area may have an offset with respect to the origin of the local space of the trackable. The offset may be provided by a 3D (x,y,z) vector. In examples, the 2D area may be represented by a 2D mesh whose vertices may be expressed in the local space of the trackable.

In examples, the 3D volume described herein may be represented by an axis-aligned bounding box (e.g., with related width, height, and depth parameters) and centered at the origin of the local space of the trackable. In examples, the 3D volume may be represented by a sphere of radius R centered at the origin of the local space of the trackable. In examples, the box or sphere volume may have an offset with respect to the origin of the local space of the trackable. The offset may be provided by a 3D (x,y,z) vector. In examples, the 3D volume may be represented by a 3D mesh whose vertices may be expressed in the local space of the trackable.

The available 2D area or 3D volume described herein may be known or measured from a captured scan of the real environment around the trackable. A WTRU may request the available 2D area or 3D volume from the AR Runtime. For instance, an API (e.g., the Khronos OpenXR API) may provide an available rectangular area via the XrExtend2df information (e.g., the width and the height of the available rectangular area) from the xrGetReferenceSpaceBoundsQ method for a trackable of type FLOOR (e.g., the XR_REFERENCE_SPACE_TYPE_STAGE reference space).

The determination of the available space (e.g., 2D area or 3D volume) may be performed once, for example, after an AR runtime is configured for the trackable. The available space may correspond to a static real environment.

The determination of the available space (e.g., 2D area or 3D volume) may be performed multiple times during an XR session, for example, periodically or triggered by an event. A periodic determination may be performed for a continuously time-evolving real environment. The periodic duration may be adapted to the rate of the time evolution. An even-based determination may be performed when the spatial configuration of the real objects in the vicinity of the trackable has changed (e.g., a chair has been displaced, removed, or added in the case of a trackable of type FLOOR).

On the service side (e.g., for split rendering), the server (e.g., the split rendering server described herein) may receive a pose of (e.g., each) trackable that the server may use to position one or more virtual objects within a user-realistic environment (e.g., before rendering a 3D scene). The WTRU and the split rendering server may share common information related to the trackables (e.g., at the configuration step) to ensure that the trackable pose data transmitted from the WTRU to the server during a rendering loop is considered by the server. The shared common information between the WTRU and the split rendering server may include an identifier (e.g., a unique identifier or the index related to the position of the XR space within a trackableSpaces array) for the base space in which one or more (e.g., all) of the transmitted trackable poses may be expressed. The base space may correspond to the world base of the XR application (e.g., the OpenXR XR_REFERENCE_SPACE_TYPE_LOCAL reference space). The shared common information may include an identifier (e.g., a unique identifier) for the XR space related to the trackables and/or the types of the trackables (e.g., the OpenXR XR_REFERENCE_SPACE_TYPE_STAGE, marker2D, etc.). The shared common information may include the current available visualization space information for a (e.g., each) trackable. For example, the current available visualization space information may include information (e.g., an enumerator) regarding the type of the space (e.g., RECTANGLE, DISK, BOX, SPHERE, 2D_MESH, 3D_MESH, etc.). The current available visualization space information may include offset information (e.g., a 3D vector) between the center of the space and the origin of the local space of the trackable. The current available visualization space information may include geometry information of the space depending on its type (e.g., radius for DISK and SPHERE, width, height, and depth for BOX, width and height for RECTANGLE, array of 3D vertices for 2D_MESH and 3D_MESH, etc.).

An identifier that identifies a trackable (e.g., a trackable object) in a scene description file may be determined (e.g., configured for a WTRU and/or a server device). In examples such as for gITF, the identifier may correspond to the index of the trackable in a trackables array (e.g., in the MPEG_anchor extension). The identifier may be used to retrieve one or more parameters associated with the trackable in the scene description file. The identifier may be used to retrieve object(s) of a virtual scene that may be attached to the trackable (e.g., through an anchor object). In examples, these object(s) may correspond to (e.g., be related to) root node(s) in Table 1 that may have an MPEG_anchor extension and for which the parameters of Table 1 may correspond to the identifier.

In examples, the base space information described herein may be transmitted within the trackable pose data (e.g., instead of being provided in a configuration data structure) during the rendering loop. One or more of the following may guide the determination of transmission method(s) and/or destination(s) of the base space information. If multiple (e.g., all) of the trackables are created/initialized with a single base space, the base space may be identified in a configuration data structure. Periodic transmissions of the base space information (which may be identical) may be avoided within the trackable pose data during the rendering loop. If the trackables switch between different base spaces during the runtime (e.g., for purposes of pose accuracy when the base space may no longer be accurately tracked), the base space information may be transmitted within the trackable pose data during the rendering loop.

The virtual positioning of virtual objects associated with a trackable pose may be simplified by providing a base space at the configuration step during a scene update task performed by the split rendering server. The trackable pose transformation from one XR space to another XR space when updating a scene may be avoided by using a single base space. When retrieving the trackable pose (e.g., using the OpenXR xrLocateSpace() function), the WTRU may use a single base space as input, even if the trackable was initialized/created using a different base space. The AR runtime may perform pose transformations between XR spaces to express the trackable pose in the input base space.

Table 6 illustrates an example of a configuration data structure to which trackable information may be added.

**Table 6: Examples of updated Split rendering configuration data including trackable information**

| **Name** | **Type** | **Cardinalit y** | | **Description** | | |
|---|---|---|---|---|---|---|
| renderingFlags | Array(SR_CONFIG_FLA GS) | 0..1 | | Provides a set of flags to activate/deactivate selected rendering functions. The defined SR_CONFIG_FLAGS are: | | |
| | | | | | • | FLAG_ALPHA_BL ENDING |
| | | | | | • | FLAG_DEPTH_CO MPOSITION |
| | | | | | • | FLAG_EYE_GAZE _TRACKING |
| spaceConfiguration | Object | 0..1 | | The space configuration may be sent by a split rendering server to a split rendering client. Upon reception of this information, the SR client may use the information to create reference and | | |
| | | | | | | action spaces as well as to agree on common identifiers for the XR spaces. |
| BaseSpace | number | | | | 0..1 | An identifier to the XR space in which multiple (e.g., all) transmit poses of a trackable from an SR client to an SR server may be expressed during a rendering loop. |
| TrackableSpaces | Array | | | | 0..n | An array of trackable spaces and their identifiers. |
| Id | number | | | | 1..1 | A unique identifier of the XR space in the context of the split rendering session. |
| TrackableSpace | enum | | | | 1..1 | A trackable space such as that defined in the MPEG _ anchor extension of MPEG-I Scene Description. |
| SDtrackablelndex | number | | | | 0..1 | The trackable identifier from the scene description file or a scene graph. |
| | | | | | | For gITF, it may correspond to the index of the trackable in the trackables array in the MPEG_anchor extension. |
| AvailableVisualizati onSpace | Object | | | | 0..1 | Space around the trackable that may be suitable for rendering virtual objects. The virtual objects may remain within the defined available visualization space. |
| Type | enum | | | | 1..1 | Defines the type of the space, e.g., RECTANGLE, DISK, BOX, SPHERE, 2D_MESH or 3D_MESH. |
| Offset | Object | | | | 1..1 | Offset of the space with respect to the origin of the local space of the trackable |
| x | | number | | | 1..1 | x-coordinate of the offset |
| y | | number | | | 1..1 | y-coordinate of the offset |
| z | | number | | | 1..1 | z-coordinate of the offset |
| radius | | number | | | 0..1 | Radius in meter for type DISK or SPHERE |
| width | | number | | | 0..1 | Width in meter in the x direction of the local space of the trackable for type RECTANGLE or BOX |
| height | | number | | | 0..1 | Height in meter in the y direction of the local space of the trackable for type RECTANGLE or BOX |
| depth | | number | | | 0..1 | Depth in meter in the z direction of the local space of the trackable for type BOX |
| vertices | | Array | | | 0..1 | Array of the vertices for type 2D_MESH or 3D_MESH |
| vertex | | Object | | | 1..1 | Vertex for type 2D_MESH or 3D_MESH |
| x | | number | | | 1..1 | x-coordinate of the vertex |
| y | | number | | | 1..1 | y-coordinate of the vertex |
| z | | number | | | 1..1 | z-coordinate of the vertex |
| actionSpaces | | Array | | | 0..1 | An array of action spaces that may be defined by a split rendering client in an XR session. |
| | Id | number | | | 1..1 | A unique identifier of the XR space in the context of a split rendering session. |
| | Actionld | number | | | 1..1 | Provides the unique identifier of an action. |
| | SubactionPath | string | | | 1..1 | The subaction path identifies an action, which can then be mapped by the XR runtime to user input modalities. |
| | InitialPose | Pose | | | 0..1 | Provides the initial pose of a new XR space's origin. |
| ViewConfiguration | | Object | | | 0..1 | Conveys the view configuration that is configured for an XR session. |
| | Type | Enum | | | 1..1 | The type indicates the view configuration. Defined values are MONO and STEREO. Other values may be added. |
| | Width | number | | | 1..1 | The recommended width of a swapchain image. |
| | Height | number | | | 1..1 | The recommended height of a swapchain image. |
| Composition Layer | | string | | | 1..1 | An identifier of a selected composition layer. |
| EnvironmentBlend Mode | | enum | | | 1..1 | The type indicates the environment blend mode configuration. Defined values are OPAQUE, ADDITIVE and ALPHA_BLEND. Other values may be added. |
| ActionConfiguration | | Array | | | 0..1 | This contains a list of the actions that may be defined by an SR client. |
| | Action | Object | | | 1..n | A definition of a single action object. |
| | Id | number | | | 1..1 | A unique identifier of an action. |
| | ActionType | enum | | | 1..1 | The type of an action state. This can be a Boolean, float, vector2, pose, vibration output, etc. |
| | subactionPaths | string | | | 1..n | An array of subaction paths associated with an action. A split rendering client may provide the state of multiple (e.g., all) defined sub-action paths. |
| ExtraConfigurations | | Object | | | 0..1 | A placeholder for additional configuration information. |

In examples, the relationship (e.g., a mapping) between the identifier of a trackable in a scene description file and the identifier of an XR space may be configured, for example, via an "extraConfigurations" field of the configuration data in Table 6 shown herein. Based on such additional configuration information, the XR space related to the trackable (or the tractable(s) included in an XR space) may be determined. The additional configuration This may be illustrated by Table 6-bis below.

**Table 6-bis: Examples of extra configuration data including trackable information**

| **Name** | **Type** | **Cardinali ty** | **Description** |
|---|---|---|---|
| extraConfigurations | Object | 0..1 | A placeholder for additional configuration information in the configuration data structure of Table 6. |
| trackableConfigurations | Array | 0..1 | This may include a list of trackable configurations. |
| trackableSpaceId | number | 1..1 | The unique identifier of an XR space related to the trackable in the context of a split rendering session. It may be the value of the field |
| | | | "spaceConfiguration.trackableSpa ces.id" in Table 6 for this trackable. |
| SDtrackableIndex | number | 1..1 | The trackable identifier from the scene description file or a scene graph. |
| | | | For gITF, it may correspond to the index of the trackable in the trackables array in the MPEG_anchor extension. |

At 806 of FIG. 8, the WTRU may (e.g., periodically) retrieve and transmit trackable pose data to a split rendering server. The transmission may be performed for one or more rendering loops. To retrieve the pose information for a (e.g., each) trackable, the WTRU may use a function (e.g., the OpenXR xrLocateSpace() function) with one or more of the following input parameters. For example, the input parameters may include the XR space related to the trackable for which the pose may be retrieved. The XR space may be (e.g., locally) configurated by the WTRU and/or known by the split rendering server. As another example, the input parameters may include the base space in which the trackable pose may be expressed. The base space may be (e.g., locally) configurated by the WTRU and/or known by the split rendering server. As another example, the input parameters may include the time for which the trackable pose may be provided. The time may be a past, current, or future time. If the time is a future time, the pose may be predicted.

The WTRU may associate a confidence level (e.g., a number between 0 and 1, with 0 as the lowest confidence and 1 as the highest confidence) with a trackable pose. The confidence level may be retrieved or calculated (e.g., based on valid and/or tracked information returned by the XR runtime such as the XrSpaceLocation structure returned by the OpenXR xrLocateSpace() function).

In examples such as where the available visualization space is determined multiple times during an XR session, the updated space information may be sent to the Split Rendering Server with trackable pose data. In these examples, the association between the trackable, its pose and the available visualization space may be established. In examples, the available visualization space data may be transmitted within a dedicated separated structure. In these examples, the association between the trackable and the available visualization space may be maintained. For instance, a unique identifier of the trackable may be added to the separated visualization space data structure. As another example, the trackable pose and the available visualization space arrays may be ordered consistently (e.g., the Nth element of the available visualization space array may correspond to the Nth element of the trackable pose array).

The trackable pose data may be transmitted to the split rendering server using a certain format (e.g., a JSON format), for example, within the current view pose data structure or within a separated, dedicated data structure.

In examples, the trackable pose data may be transmitted within a view pose data structure. For example, the same data structure may be used to transmit pose data for views and trackables (e.g., if there are common data that may otherwise cause transmission of redundant information). The common data may include a common shared base space in which multiple (e.g., all) view and trackable poses may be expressed, or a common prediction time (e.g., a display time).

The view pose data structure described herein (e.g., as shown in Table 4) may be updated to include the pose data of trackable. Table 7 shows examples of updated split rendering pose data integrating trackable pose data.

**Table 7: Examples of updated split rendering pose data integrating trackable pose data**

| **Name** | | | | **Type** | **Cardinality** | **Description** | |
|---|---|---|---|---|---|---|---|
| pose Info | | | | Object | 1..n | An array of pose information objects, each corresponding to a predicted time and/or XR space. | |
| | predictionTime | | | number | 1..1 | The time for which the current view and trackable poses are predicted. | |
| baseSpace | | | | number | 0..1 | An identifier for the XR space in which view and trackable poses may be expressed if a base space identifier was not provided in a configuration data structure. The set of XR spaces may be agreed on between a split rendering client and a split rendering server at the setup of a split rendering session. The set of XR spaces may be negotiated as part of a split rendering configuration. | |
| trackablePoses | | | | Object | 0..n | An array that provides a list of the poses associated with a (e.g., each) trackable. | |
| | trackableSpaceId | | | number | 1..1 | An identifier to the XR space related to a trackable. The number of trackables and their related XR space may be determined during the split rendering session setup between a split rendering client and a server. | |
| | trackablePose | | | Object | 1..1 | An object that carries the pose information for a particular trackable. | |
| | | orientation | | Object | 1..1 | Represents the orientation of the trackable pose as a quaternion expressed in a base space. | |
| | | | x | number | 1..1 | Provides the x coordinate of a quaternion. | |
| | | | y | number | 1..1 | Provides the y coordinate of a quaternion. | |
| | | | z | number | 1..1 | Provides the z coordinate of a quaternion. | |
| | | | w | number | 1..1 | Provides the w coordinate of a quaternion. | |
| | TrackablePosition | | | Object | 0..1 | Represents the location in a 3D space of the pose expressed in a base space. | |
| | | x | | number | 1..1 | Provides the x coordinate of a position vector. | |
| | | y | | number | 1..1 | Provides the y coordinate of a position vector. | |
| | | z | | number | 1..1 | Provides the z coordinate of a position vector. | |
| | | | | Object | 0..1 | Space around the trackable that is suitable for rendering virtual objects. The virtual objects may remain within the defined available visualization space. | |
| availableVisualizationSpace | | | | | | | |
| | | type | | enum | 1..1 | Defines the type of the space. Either RECTANGLE, DISK, BOX, SPHERE, 2D_MESH or 3D_MESH | |
| | | offset | | Object | 1..1 | Offset of the space with respect to the origin of the local space of the trackable | |
| | | | x | number | 1..1 | x-coordinate of the offset | |
| | | | y | number | 1..1 | y-coordinate of the offset | |
| | | | z | number | 1..1 | z-coordinate of the offset | |
| | | radius | | number | 0..1 | Radius in meter for type DISK or SPHERE | |
| | | width | | number | 0..1 | Width in meter in the x direction of the local space of the trackable for type RECTANGLE or BOX | |
| | | height | | number | 0..1 | Height in meter in the y direction of the local space of the trackable for type RECTANGLE or BOX | |
| | | depth | | number | 0..1 | Depth in meter in the z direction of the local space of the trackable for type BOX | |
| | | vertices | | Array | 0..1 | Array of the vertices for type 2D_MESH or 3D_MESH | |
| | | | vertex | Object | 1..1 | Vertex for type 2D_MESH or 3D_MESH | |
| | | | | x | number | 1..1 | x-coordinate of the vertex |
| | | | | y | number | 1..1 | y-coordinate of the vertex |
| | | | | z | number | 1..1 | z-coordinate of the vertex |
| viewPoses | | | | | Object | 0..n | An array that provides a list of poses associated with a view. The number of views may be determined during the split rendering session setup between a split rendering client and a server, depending on the view configuration of an XR session. |
| | pose | | | | Object | 1..1 | An object that carries the pose information for a particular view. |
| | | orientation | | | Object | 1..1 | Represents the orientation of a view pose as a quaternion expressed in a base space. |
| | | | x | | number | 1..1 | Provides the x coordinate of a quaternion. |
| | | | y | | number | 1..1 | Provides the y coordinate of a quaternion. |
| | | | z | | number | 1..1 | Provides the z coordinate of a quaternion. |
| | | | w | | number | 1..1 | Provides the w coordinate of a quaternion. |
| | | position | | | Object | 1..1 | Represents the location in the 3D space of a pose expressed in a base space. For eye gaze poses, the position may or may not be required. |
| | | | x | | number | 1..1 | Provides the x coordinate of a position vector. |
| | | | y | | number | 1..1 | Provides the y coordinate of a position vector. |
| | | | z | | number | 1..1 | Provides the z coordinate of a position vector. |
| | confidence | | | | number | 0..1 | This parameter provides a confidence score that reflects the probability for a pose prediction to be correct. The confidence can take a value between 0 and 1. If not provided by the XR runtime, this field may be estimated by an SRC or be omitted. |
| | fov | | | | Object | 1..1 | Indicates the four sides of the field of view used for the projection of a corresponding XR view. |
| | | angleLeft | | | number | 1..1 | The angle of the left side of the field of view. For a symmetric |
| | | | | field of view this value may be negative. | | | |
| | angleRight | number | 1..1 | The angle of the right side of the field of view. | | | |
| | angleUp | number | 1..1 | The angle of the top part of the field of view. | | | |
| | angleDown | number | 1..1 | The angle of the bottom part of the field of view. For a symmetric field of view this value may be negative. | | | |

In examples, the trackable pose data may be transmitted within a separate, dedicated data structure. Separate, dedicated data structures may be used to transmit the pose data of views and trackables if there is no common data (e.g., between the two sets of data). A split rendering client on an XR device may (e.g., periodically) transmit a set of trackable pose predictions to a split rendering server (e.g., the relevant message type may be set to "urn:3gpp:split-rendering:v1:space"). A predicted trackable pose may include an associated predicted time and/or an identifier of the XR base space that may be used for the pose. If a common base space is used for multiple (e.g., all) of the trackables, the base space information may be mutualized in the transmitted data structure.

Table 8 shows an example payload of a message that may be used to transmit trackable pose data (e.g., if non-mutualized base space is used).

**Table 8: Examples of predicted pose data associated with a split rendering trackable**

| **Name** | | | **Type** | **Cardinality** | **Description** | | |
|---|---|---|---|---|---|---|---|
| spacelnfo | | | Object | 1..n | An array of trackable pose information objects, each corresponding to a predicted time. | | |
| | predictedTime | | number | 1..1 | The time for which the current trackable poses are predicted. | | |
| | trackablePoses | | Object | 0..n | An array that provides a list of the poses associated with a trackable | | |
| | | baseSpace | number | 0..1 | An identifier for the XR space in which the trackable poses are expressed if the base space identifier was not provided in a configuration data structure. The set of XR spaces may be agreed on between a split rendering client and a split rendering server at the setup of a split rendering session. | | |
| | | trackableSpaceId | number | 1..1 | An identifier to the XR space related to the trackable. The number of trackables and their related XR space may be | | |
| | | | | | | | determined during the split rendering session setup between a split rendering client and a server. |
| | pose | | | | Object | 1..1 | An object that carries the pose information for the trackable. |
| | | orientation | | | Object | 1..1 | Represents the orientation of the trackable pose as a quaternion expressed in a base space. |
| | | | x | | number | 1..1 | Provides the x coordinate of a quaternion. |
| | | | y | | number | 1..1 | Provides the y coordinate of a quaternion. |
| | | | z | | number | 1..1 | Provides the z coordinate of a quaternion. |
| | | | w | | number | 1..1 | Provides the w coordinate of a quaternion. |
| | | position | | | Object | 1..1 | Represents the location in a 3D space of the pose expressed in a base space. |
| | | | x | | number | 1..1 | Provides the x coordinate of a position vector. |
| | | | y | | number | 1..1 | Provides the y coordinate of a position vector. |
| | | | z | | number | 1..1 | Provides the z coordinate of a position vector. |
| | confidence | | | | number | 0..1 | This parameter provides a confidence score that reflects the probability for a pose prediction to be correct. The confidence can take a value between 0 and 1. If not provided by the XR runtime, this field may be estimated by the SRC or omitted. |
| availableVisualizationSpace | | | | | Object | 0..1 | Space around the trackable that is suitable for rendering virtual objects. The virtual objects may remain within the defined available visualization space. |
| | | | type | | enum | 1..1 | Defines the type of the space. Either RECTANGLE, DISK, BOX, SPHERE, 2D_MESH or 3D MESH |
| | | | offset | | Object | 1..1 | Offset of the space with respect to the origin of the local space of the trackable |
| | | | | x | number | 1..1 | x-coordinate of the offset |
| | | | | y | number | 1..1 | y-coordinate of the offset |
| | | | | z | number | 1..1 | z-coordinate of the offset |
| | | | radius | | number | 0..1 | Radius in meter for type DISK or SPHERE |
| | width | | | number | 0..1 | Width in meter in the x direction of the local space of the trackable for type RECTANGLE or BOX | |
| | height | | | number | 0..1 | Height in meter in the y direction of the local space of the trackable for type RECTANGLE or BOX | |
| | depth | | | number | 0..1 | Depth in meter in the z direction of the local space of the trackable for type BOX | |
| | vertices | | | Array | 0..1 | Array of the vertices for type 2D_MESH or 3D_MESH | |
| | | vertex | | Object | 1..1 | Vertex for type 2D_MESH or 3D_MESH | |
| | | | x | number | 1..1 | x-coordinate of the vertex | |
| | | | y | number | 1..1 | y-coordinate of the vertex | |
| | | | z | number | 1..1 | z-coordinate of the vertex | |

If a common base space is used to express multiple (e.g., all) trackable poses, a baseSpace identifier may be mutualized (e.g., placed at the same level as a predictedTime).

One or more semantics updates may be implemented to support trackable pose data transmission over a network. These updates may include those shown in Table 6 and/or Table 6-bis in comparison to Table 3 (e.g., related to split rendering configuration setup) and/or those shown in Table 7 in comparison to Table 4 (e.g., related to a split rendering operation). If a separated, dedicated data structure is used to transmit the trackable pose data, one or more additional semantics sections may be included.

## Claims

1. A wireless transmit/receive unit (WTRU), comprising:
a processor configured to:
determine a trackable object associated with a scene;
determine an identifier that identifies the trackable object in a scene description file associated with the scene; and
transmit configuration information to a server, wherein the configuration information indicates the identifier that identifies the trackable object in the scene description file.

2. The WTRU of claim 1, wherein the processor is further configured to determine a trackable objects array and wherein the identifier that identifies the trackable object corresponds to an index of the trackable object in the trackable objects array.

3. The WTRU of claim 1 or claim 2, wherein the processor is further configured to determine one or more other parameters associated with the trackable object from the scene description file based on the identifier that identifies the trackable object in the scene description file.

4. The WTRU of any of claims 1-3, wherein the processor is further configured to determine, based on the identifier that identifies the trackable object in the scene description file, one or more other trackable objects in the scene that are attached to the trackable object.

5. The WTRU of any of claims 1-4, wherein the processor is further configured to determine a mapping between the identifier that identifies the trackable object in the scene description file and an identifier of a space related to the trackable object.

6. The WTRU of claim 5, wherein the processor is further configured to determine the space related to the trackable object based on the mapping.

7. A method implemented by a wireless transmit/receive unit (WTRU), the method
comprising:
determining a trackable object associated with a scene;
determining an identifier that identifies the trackable object in a scene description file associated with the scene; and
transmitting configuration information to a server, wherein the configuration information indicates the identifier that identifies the trackable object in the scene description file.

8. The method of claim 7, further comprising determining a trackable objects array, wherein the identifier that identifies the trackable object corresponds to an index of the trackable object in the trackable objects array.

9. The method of claim 7 or claim 8, further comprising determining one or more other parameters associated with the trackable object from the scene description file based on the identifier that identifies the trackable object in the scene description file.

10. The method of any of claims 7-9, further comprising determining, based on the identifier that identifies the trackable object in the scene description file, one or more other trackable objects in the scene that are attached to the trackable object.

11. The method of any of claims 7-10, further comprising determine a mapping between the identifier that identifies the trackable object in the scene description file and an identifier of a space related to the trackable object.

12. The method of claim 11, further comprising determining the space related to the trackable object based on the mapping.

13. A server device, comprising:
a processor configured to:
receive configuration information from a wireless transmit/receive unit, wherein the configuration information indicates an identifier that identifies a trackable object in a scene description file;
determine the trackable object in a scene associated with the scene description file; and
generate rendering information associated with the trackable object based at least on the identifier that identifies the trackable object in the scene description file.

14. The server device of claim 13, wherein the processor is further configured to determine a mapping between the identifier that identifies the trackable object in the scene description file and an identifier of a space related to the trackable object.

15. A method implemented by a server device, the method comprising:
receiving configuration information from a wireless transmit/receive unit, wherein the configuration information indicates an identifier that identifies a trackable object in a scene description file;
determining the trackable object in a scene associated with the scene description file;
and
generating rendering information associated with the trackable object based at least on the identifier that identifies the trackable object in the scene description file.
